# EUROPÄISCHE PATENTSCHRIFT

(11) **EP 1 195 302 B1**
(45) Veröffentlichungstag und Bekanntmachung des Hinweises auf die Patenterteilung: **21.09.2005**
(21) Anmeldenummer: 01122833.5
(22) Anmeldetag: 22.09.2001
(51) Int. Cl.: B60S 1/20

(54) **Scheibenwischvorrichtung, insbesondere für ein Kraftfahrzeug**
Windscreen wiper device, in particular for a vehicle
Dispositif d'essuie-glace, en particulier pour un véhicule

(30) Priorität: 05.10.2000 DE 10049189
(43) Veröffentlichungstag der Anmeldung: 10.04.2002
(73) Patentinhaber: ROBERT BOSCH GMBH, 70442 Stuttgart (DE)
(72) Erfinder: Neubauer, Achim, 76547 Sinzheim-Vormberg (DE); Bolz, Martin-Peter, 77815 Buehl (DE); Moench, Jochen, 76547 Sinzheim (DE)

(56) Entgegenhaltungen:
- EP-A- 0 236 757
- DE-B- 1 455 961
- FR-A- 827 531
- FR-A- 2 602 474
- GB-A- 1 280 617
- US-A- 3 758 911
- US-A- 4 418 440

## Beschreibung

### Stand der Technik

Die Erfindung betrifft eine Scheibenwischvorrichtung nach Gattung des unabhängigen Anspruchs. Derartige Scheibenwischvorrichtungen sind aus zahlreichen Veröffentlichungen bereits bekannt. Diese weisen einen Wischerarm auf, welcher auf einer Wischerwelle sitzt, die durch ein Kurbelgetriebe von einem Elektromotor angetrieben wird.

Weiterhin ist bekannt, Wischerwellen über Seilzuggetriebe anzutreiben. Aus der nicht vorveröffentlichten DE 100 35 039 eine Scheibenwischvorrichtung bekannt, bei der ein reversierender Elektromotor mittels eines Schneckengetriebes den Wischerarm pendelnd antreibt. Das Dokument US-A-3 758 911 offenbart eine Scheibenwischvorrichtung gemäß dem Oberbegriff des Anspruchs 1.

All diese Lösungen sind jedoch aufwendig in der Herstellung und kostenintensiv oder benötigen relativ viel Bauraum.

### Vorteile der Erfindung

Die erfindungsgemäße Scheibenwischvorrichtung mit den Merkmalen des Hauptanspruchs hat den Vorteil, dass durch die winkelabhängige Variabilität des die Wischerwelle in Bewegung setzenden Hebelarms das vom Elektromotor auf den Wischerarm übertragene Drehmoment winkelabhängig und nichtlinear variiert. Diese nichtlinearität ist von Kurbelgetrieben bekannt, jedoch benötigen diese sehr viel Bauraum. Durch die erfindungsgemäße Scheibenwischvorrichtung hingegen, muß auf die Vorteile eines Schneckengetriebes wie geringe Bauhöhe und Zuverlässigkeit nicht verzichtet werden, wobei gleichzeitig ein ähnliches Drehmomentenprofil wie bei einer Scheibenwischvorrichtung mit Kurbelgetriebe erreicht wird.

Durch die in den Unteransprüchen aufgeführte Maßnahmen ergeben sich vorteilhafte Weiterbildungen und Verbesserungen der im Hauptanspruch angegebenen Merkmale.

Besonders vorteilhaft ist es, wenn die Zahnstruktur des Schneckengetriebes als Freiformzahnrad, vorzugsweise als elliptisches Zahnrad ausgebildet ist, da auf diese Weise nahezu beliebige Drehmomentenprofile erreicht werden können. Darüber hinaus sind elliptische Zahnräder als Serienartikel kostengünstig in hohen Stückzahlen erhältlich.

Weist die Zahnstruktur eine Führung auf, die beispielsweise als Führungsnut oder als Führungsschiene ausgebildet ist, kann eine exakte Führung der Schnecke entlang der Zahnstruktur hergestellt werden, was eine hohe Betriebssicherheit und eine hohe Momentenübertragung in jeder Winkelstellung der Zahnstruktur gewährleistet.

Besonders vorteilhaft ist es, wenn die Schnecke mittels einer Kulissenführung präzise an der Zahnstruktur gehalten ist, wodurch eine hohe und zuverlässige Drehmomentenübertragung gewährleistet ist.

Weiterhin ist es von Vorteil wenn der Elektromotor, der die Schnecke antreibt, drehbar gelagert ist um eine aufwendige Mechanik, welche zur Verschiebung der Schnecke notwendig wäre zu vermeiden. Die Schnecke kann so direkt auf der Ankerwelle des Elektromotors sitzen oder auch einstückig mit der Ankerwelle ausgebildet sein.

Ist die Schnecke mittels einer Feder in Eingriff mit der Zahnstruktur gehalten, so kann auf sehr kostengünstige Weise, ohne eine aufwändige Führung, die Kraft- oder Drehmomentenübertragung zwischen Schnecke und Zahnstruktur erreicht werden.

Ist der Wischerarm der Scheibenwischvorrichtung zwischen seinen beiden Endpositionen pendelbar gelagert und ist an diesen Endpositionen der Hebelarm maximal, so steht in den kritischen Umkehrlageh ein besonders hohes Drehmoment zur Verfügung um ein sicheres Umkehren der Wischer zu erreichen. Darüber hinaus nimmt die Wischgeschwindigkeit dann bis zur Mitte kontinuierlich zu und von dort ebenso wieder kontinuierlich ab, was einen besonders harmonischen Geschwindigkeitsverlauf des Wischerarms zur Folge hat.

Durch die verringerte Geschwindigkeit im Bereich der Umkehrlagen reduzieren sich auch die Massenträgheitskräfte, die auf das System während des Umkehrens wirken.

Bildet dieses, aus Schnecke und Zahnstruktur gebildete Getriebe, ein Untersetzungsverhältnis von 40:1 bis 75:1, so ergibt sich eine hohe Drehmomentenamplitude wodurch das Antriebsmoment des Motors und somit seine Baugröße verringert werden können.

Ist der Elektromotor als elektronisch kommutierender Reversiermotor ausgebildet, so können gezielt Verschleißteile eingespart werden und die Lebensdauer des Elektromotors und damit der Scheibenwischvorrichtung erhöht werden.

Besonders vorteilhaft ist es, wenn der Elektromotor direkt an der Fahrzeugkarosserie befestigt ist. Auf diese Weise ist keine Rohrplatine und keine überflüssigen Trägerteile für die Scheibenwischvorrichtung vonnöten, wodurch weiter Kosten und Bauraum eingespart werden kann.

### Zeichnung

Ein Ausführungsbeispiel der Erfindung ist in den Zeichnungen dargestellt und in der nachfolgenden Beschreibung näher erläutert. Es zeigen:
Fig. 1 eine erfindungsgemäße Scheibenwischvorrichtung in schematischer Darstellung und
Fig. 2a und 2b das Getriebe einer erfindungsgemäßen Scheibenwischvorrichtung in schematischer Darstellung.

### Beschreibung des Ausführungsbeispiels

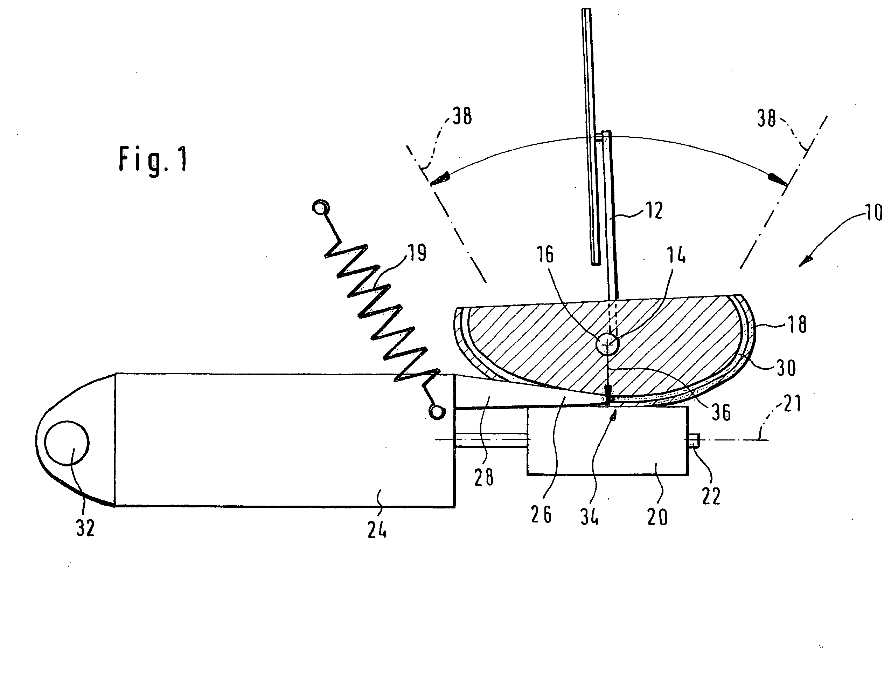

In Fig. 1 ist eine erfindungsgemäße Scheibenwischvorrichtung 10 schematisch dargestellt. Sie weist einen Wischerarm 12 auf, der mit einer Wischerwelle 14 drehfest verbunden ist. Die Wischerwelle 14 ist drehbar um eine Lagerachse 16 gelagert und mit einer Zahnstruktur 18, die als elliptisches Zahnrad ausgebildet ist, drehfest verbunden. Dazu ist das elliptische Zahnrad 18 durch eine Bohrung in seinem Zentrum auf die Wischerwelle 14 aufgepresst. Natürlich ist es erfindungsgemäß auch möglich, zwischen Wischerwelle 14 und Zahnrad 18 ein Getriebe anzuordnen, um beispielsweise mehrere Wischerwellen 14 mit einem elliptischen Zahnrad 18 anzutreiben.

Die Zahnstruktur 18, die prinzipiell beliebig geformt sein kann, ist dabei mit einer Schnecke 20 wirkverbunden, welche wiederum koaxial auf einer Abtriebswelle 22 eines Elektromotors als Antrieb 24 sitzt. Die Schnecke 20 kann dabei einstückig mit der Abtriebswelle 22 ausgebildet sein, natürlich ist es auch möglich die Schnecke auf die Abtriebswelle 22 aufzupressen oder auf andere Weise drehfest zu verbinden.

Um eine ständige Wirkverbindung zwischen Schnecke 20 und Zahnstruktur 18 zu gewährleisten, ist die Schnecke 20 und damit auch die Abtriebswelle 22 durch eine Kulissenführung 26 mit der Zahnstruktur 18 verbunden. Diese besteht aus einem Führungsfinger 28 mit zwei Enden, wobei ein Ende mit dem Elektromotor 24 verbunden ist und das andere Ende einen nicht dargestellten Führungszapfen aufweist. Dieser Führungszapfen greift in eine Führungsnut 30 ein, die an der Zahnstruktur 18 etwa entlang der Außenkontur angeordnet ist, so dass die Schnecke 20 immer bestmöglichst in die Zähne der Zahnstruktur 18 eingreift. Der Bereich in dem die Schnecke 20 und die Zahnstruktur 18 miteinander wirkverbunden sind, bildet einen Berührungsbereich 34, der je nach Winkelstellung der Zahnstruktur 18 in verschiedenen Abschnitten der Schnecke 20 sein kann.

Der Elektromotor 24 muß drehbar gelagert sein, wozu er an seinem der Abtriebswelle 22 abgewandten Ende mittels eines Drehgelenkes 32, beispielsweise an der Fahrzeugkarosserie drehbar befestigt ist. Die Drehachse des Drehgelenkes 32 ist dabei parallel zur Lagerachse 16 der Wischerwelle 14 angeordnet und schneidet die Parallele zur Abtriebswelle 22, die durch den Berührungsbereich 34 führt. Der Hebelarm 40, der durch den senkrechten und damit minimalen Abstand zwischen Lagerachse 18 und einer koaxial zur Abtriebswelle 22 liegenden Geraden 21 bestimmt ist, ist dabei maßgeblich für das auf den Wischerarm 12 wirkende Drehmoment.

Im Folgenden wird die Funktion der erfindungsgemäßen Scheibenwischvorrichtung in verschiedenen Betriebsstellungen erläutert.

Wird der Elektromotor 24 in Gang gesetzt, so dreht sich die Abtriebswelle 22 um ihre eigene Achse, wodurch auch die Schnecke 20 in Bewegung gesetzt wird. Da die Windungen der Schnecke 20 mit der Zahnstruktur 18 in Eingriff stehen, beginnt diese auch die Wischerwelle 14 und damit den Wischeram 12 anzutreiben. Diese Bewegung wird solange fortgesetzt bis der Wischerarm 12, der üblicherweise zwischen zwei Endpositionen 38 pendeln soll, eine diese Endpositionen 38 erreicht hat. Durch die elliptische Form der Zahnstruktur 18 vergrößert sich dabei der Abstand 36 zwischen der Lagerachse 18, die gleichzeitig das Zentrum der elliptischen Zahnstruktur 18 bildet, und dem Berührungsbereich 34 der Schnecke 20 mit der Zahnstruktur 18. Mit einer Vergrößerung des Abstandes 36 vergrößert sich jedoch unmittelbar das auf den Wischerarm 12 übertragene Drehmoment, da sich dadurch auch der wirksame Hebelarm 40 vergrößert. Hat der Wischeram 12 die Endposition 38 erreicht, so wird der Elektromotor 24 gestoppt und in entgegengesetzter Richtung wieder in Betrieb gesetzt.

Bei dieser Bewegung bewegt sich der Berührungsbereich 34 auf der Schnecke 20 jeweils in die Außenrichtung. Aus diesem Grunde muß die Schnecke 20 eine ausreichende Länge aufweisen und kann auch nicht-zylindrisch, beispielsweise ballig ausgebildet sein.

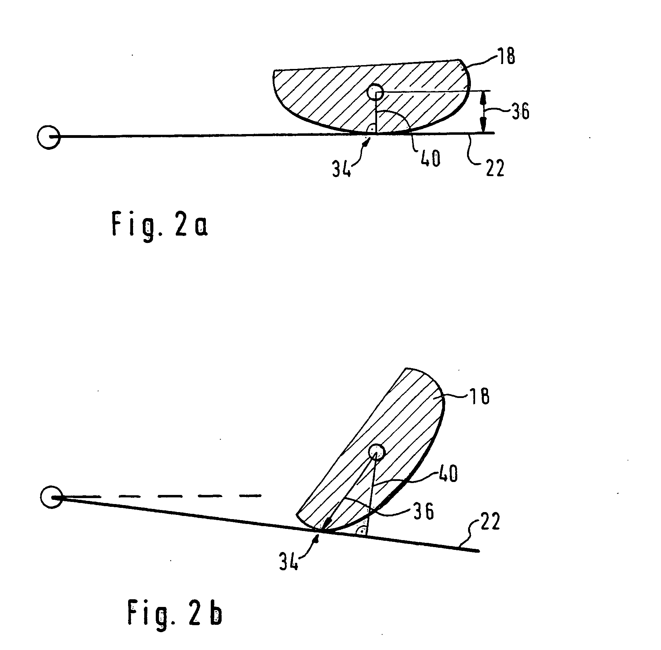

In den Fig. 2a und 2b ist dies als vereinfachtes Schema dargestellt. In der oberen Figur 2a befindet sich der hier nicht dargestellte Wischerarm etwa in der Mitte zwischen den beiden Endpositionen 38. Der Abstand 36 ist hier um etwa den Faktor 2 kleiner als im unten, in Figur 2b dargestellten Fall, bei dem sich der Wischerarm im Bereich einer der beiden Endpositionen 38 befindet. Dadurch ist auch der Hebelarm 40 in der Endposition 38 deutlich größer als in der in Figur 2a dargestellten Position. Typischerweise sind die Untersetzungsverhältnisse dadurch im Bereich von 40:1 bis 75:1 also etwa 60:1.

In einer Variation der Erfindung kann beispielsweise anstatt einer Kulissenführung eine einfache Feder 19 vorgesehen sein, die derart angeordnet ist, dass sie die Schnecke 20 immer in Richtung der Lagerachse 16, also in Richtung des Zentrums der Zahnstruktur 18 drückt oder zieht, abhängig von der Art und Anordnung der Feder 19.

## Patentansprüche

1. Scheibenwischvorrichtung (10), insbesondere für ein Kraftfahrzeug, mit einem Antrieb (24) der mindestens eine, mindestens eine Schnecke (20) tragende Abtriebswelle (22) aufweist und mit mindestens einer, mit einem Wischerarm (12) verbindbaren Wischerwelle (14), die um eine Lagerachse (16) drehbar gelagert und durch den Antrieb (24) antreibbar ist, wobei
die Schnecke (20) mit einer Zahnstruktur (18) kämmt, die mit der Wischerwelle (14) in drehfester Verbindung steht,
und der senkrechte Abstand zwischen einer sich koaxial zur Drehachse der Schnecke (20) erstreckenden Geraden (21) und der Lagerachse (16) einen Hebelarm (40) definiert,
**dadurch gekennzeichnet,**
**daß** der Hebelarm (40) bei mehreren Winkelstellungen der Wischerwelle (14) jeweils verschieden lang ist.

2. Scheibenwischvorrichtung (10), nach einem der vorhergehenden Ansprüche, **dadurch gekennzeichnet, daß** der Wischerarm (12) zwischen zwei Endpositionen (38) pendelbar gelagert ist und der Hebelarm (40) im Verlaufe eines Zyklus zwischen den beiden Endpositionen (38) an mindestens einer der Endpositionen (38) maximal ist.

3. Scheibenwischvorrichtung (10), nach einem der vorhergehenden Ansprüche, **dadurch gekennzeichnet, daß** das von Schnecke (20) und Zahnstruktur (18) gebildete Getriebe ein Untersetzungsverhältnis von 40 bis 75, vorzugsweise von etwa 60 aufweist.

4. Scheibenwischvorrichtung (10), nach einem der vorhergehenden Ansprüche, **dadurch gekennzeichnet, daß** die Zahnstruktur (18) drehfest mit der Wischerwelle (14) verbunden ist.

5. Scheibenwischvorrichtung (10), nach einem der vorhergehenden Ansprüche, **dadurch gekennzeichnet, daß** die Zahnstruktur (18) als freiform Zahnrad, vorzugsweise als elliptisches Zahnrad ausgebildet ist.

6. Scheibenwischvorrichtung (10), nach einem der vorhergehenden Ansprüche, **dadurch gekennzeichnet, daß** die Zahnstruktur (18) eine Führung (30), insbesondere eine Führungsnut aufweist.

7. Scheibenwischvorrichtung (10), nach einem der vorhergehenden Ansprüche, **dadurch gekennzeichnet, daß** die Schnecke (20) mittels einer Kulissenführung an der Zahnstruktur gehalten ist.

8. Scheibenwischvorrichtung (10), nach einem der vorhergehenden Ansprüche, **dadurch gekennzeichnet, daß** der Antrieb (24) drehbar gelagert ist.

9. Scheibenwischvorrichtung (10), nach einem der vorhergehenden Ansprüche, **dadurch gekennzeichnet, daß** die Schnecke (20) mittels einer Feder (19) in Eingriff mit der Zahnstruktur (18) gehalten ist.

10. Scheibenwischvorrichtung (10), nach einem der vorhergehenden Ansprüche, **dadurch gekennzeichnet, daß** der Antrieb (24) als elektronisch kommutierender, reversierbarer Elektromotor ausgebildet ist.

11. Scheibenwischvorrichtung (10), nach einem der vorhergehenden Ansprüche, **dadurch gekennzeichnet, daß** der Antrieb (24) direkt an der Fahrzeugkarosserie befestigt ist.

## Claims

1. Windscreen wiper device (10), in particular for a motor vehicle, having a drive (24) which has at least one output shaft (22) bearing at least one worm (20) and having at least one wiper shaft (14) which can be connected to a wiper arm (12), is mounted in a manner such that it can rotate about a bearing axis (16) and can be driven by the drive (24), the worm (20) meshing with a toothed structure (18) which is connected in a rotationally fixed manner to the wiper shaft (14), and the vertical distance between a straight line (21), which extends coaxially with the axis of rotation of the worm (20), and the bearing axis (16) defines a lever arm (40), **characterized in that**, in the case of a plurality of angular positions of the wiper arm (14), the lever arm (40) differs in length in each case.

2. Windscreen wiper device (10) according to one of the preceding claims, **characterized in that** the wiper arm (12) is mounted in a manner such that it can oscillate between two end positions (38) and the lever arm (40) is at maximum at at least one of the end positions (38) in the course of a cycle between the two end positions (38).

3. Windscreen wiper device (10) according to one of the preceding claims, **characterized in that** the gear mechanism formed by the worm (20) and toothed structure (18) has a step-down ratio of 40 to 75, preferably of approximately 60.

4. Windscreen wiper device (10) according to one of the preceding claims, **characterized in that** the toothed structure (18) is connected in a rotationally fixed manner to the wiper shaft (14).

5. Windscreen wiper device (10) according to one of the preceding claims, **characterized in that** the toothed structure (18) is designed as a free-form toothed wheel, preferably as an elliptical toothed wheel.

6. Windscreen wiper device (10) according to one of the preceding claims, **characterized in that** the toothed structure (18) has a guide (30), in particular a guide groove.

7. Windscreen wiper device (10) according to one of the preceding claims, **characterized in that** the worm (20) is held on the toothed structure by means of a slotted-guide mechanism.

8. Windscreen wiper device (10) according to one of the preceding claims, **characterized in that** the drive (24) is mounted rotatably.

9. Windscreen wiper device (10) according to one of the preceding claims, **characterized in that** the worm (20) is kept in engagement with the toothed structure (18) by means of a spring (19).

10. Windscreen wiper device (10) according to one of the preceding claims, **characterized in that** the drive (24) is designed as an electrically commutating, reversible electric motor.

11. Windscreen wiper device (10) according to one of the preceding claims, **characterized in that** the drive (24) is fastened directly to the vehicle body.

## Revendications

1. Dispositif d'essuie-glace (10) notamment pour un véhicule automobile comportant un moyen d'entraînement (24) ayant au moins un arbre moteur (22) portant une vis (20) et monté à rotation par au moins un axe d'essuie-glace (14) monté à rotation autour d'un axe de palier (16) et qui est relié à un bras d'essuie-glace (12) en étant entraîné par un moteur (24),
la vis (20) engrenant avec une structure dentée (18) reliée solidairement en rotation à l'axe d'essuie-glace (14), et
la distance verticale entre une droite (21) coaxiale à l'axe de rotation de la vis (20) et l'axe de palier (16) définit un bras de levier (40),
**caractérisé en ce que**
le bras de levier (40) a des longueurs différentes pour différentes positions angulaires de l'axe d'essuie-glace (14).

2. Dispositif d'essuie-glace (10) selon la revendication 1,
**caractérisé en ce que**
le bras d'essuie-glace (12) est monté suivant un mouvement pendulaire entre deux positions de fin de course (38) et le bras de levier (40) est maximum pour au moins l'une des positions de fin de course (38) au cours d'un cycle passant par les deux positions de fin de course (38).

3. Dispositif d'essuie-glace (10) selon l'une quelconque des revendications précédentes,
**caractérisé en ce que**
la transmission formée par la vis (20) et la structure dentée (18) a un rapport de démultiplication de 40 à 75 et de préférence de l'ordre de 60.

4. Dispositif d'essuie-glace (10) selon l'une quelconque des revendications précédentes,
**caractérisé en ce que**
la structure dentée (18) est reliée solidairement en rotation à l'axe d'essuie-glace (14).

5. Dispositif d'essuie-glace (10) selon l'une quelconque des revendications précédentes,
**caractérisé en ce que**
la structure dentée (18) est réalisée sous la forme d'une roue dentée de forme libre, de préférence une roue dentée de forme elliptique.

6. Dispositif d'essuie-glace (10) selon l'une quelconque des revendications précédentes,
**caractérisé en ce que**
la structure dentée (18) comporte un moyen de guidage (30) notamment une rainure de guidage.

7. Dispositif d'essuie-glace (10) selon l'une quelconque des revendications précédentes,
**caractérisé en ce que**
la vis (20) est tenue contre la structure dentée par un moyen de guidage en forme de coulisse.

8. Dispositif d'essuie-glace (10) selon l'une quelconque des revendications précédentes,
**caractérisé en ce que**
le moteur (24) est monté à rotation.

9. Dispositif d'essuie-glace (10) selon l'une quelconque des revendications précédentes,
**caractérisé en ce que**
la vis (20) est tenue en prise avec la structure dentée (18) par un ressort (19).

10. Dispositif d'essuie-glace (10) selon l'une quelconque des revendications précédentes,
**caractérisé en ce que**
le moyen d'entraînement (24) est un moteur électrique réversible à commutation électronique.

11. Dispositif d'essuie-glace (10) selon l'une quelconque des revendications précédentes,
**caractérisé en ce que**
le moyen d'entraînement (24) est directement fixé à la carrosserie du véhicule.
